# EUROPEAN PATENT APPLICATION

(11) **EP 2 264 638 A1**
(43) Date of publication of application: **22.12.2010**
(21) Application number: 09305550.7
(22) Date of filing: 16.06.2009
(51) Int. Cl.: G06F 21/20, G06K 9/00, G06F 21/00

(54) **Method and apparatus for analysing a section of unprotected candidate data with respect to a corresponding section of protected reference data**

(71) Applicant: Thomson Licensing, 92130 Issy-les-Moulineaux (FR)
(72) Inventor: Vorbrüggen, Jan, 44799 Bochum (DE); Kubbilun, Ingo, 44801 Bochum (DE); Onno, Stéphane, 35760 Saint-Gregoire (FR)
(74) Representative: Hartnack, Wolfgang

(57) **Abstract**

In many security related cases, image-like data is used as encrypted reference data in the security related processing steps. Although the reference data are stored initially in encrypted form in the application, these reference data need to be made available in decrypted form in an internal memory for enabling operation of the further security processing steps, e.g. when acquired image data are compared sub-section by sub-section with the reference data for checking whether they are genuine. However, a hacking tool could get access to the whole reference image data in the internal memory. According to the invention, the security processing is modified such that the reference data is never made available as a whole in decrypted form. Instead, only a sub-section of the whole encrypted reference data is made available in decrypted form 'on the fly', only while it is required during execution of the security processing.

## Description

The invention relates to a method and to an apparatus for analysing a section of unprotected candidate data with respect to a corresponding section of protected reference data, wherein the protection of the reference data must be removed for the analysing.

### Background

In security processing a 'symmetric key' is used. In some cases, this key is used for generating information items that are required in further processing steps. One example is a copy detection pattern, denoted CDP, where the CDP is generated by using such a key. The generated CDP pattern is also used for performing a verification (i.e. an analysis) of a CDP contained on an object, e.g. a printed or engraved CDP.

In many security related cases, an image or image-like data (i.e. a two-dimensional data array) is used as - security-related - reference data in calculation processing, and such data is a sensitive item when considering the application's security. Examples are:
- in fingerprint recognition, the reference image(s) with which the fingerprint to be authenticated is being compared;
- in CDP verification, (image) template matching in the field of image processing/recognition, e.g. face recognition;
- reading digital watermarks in some cases where the algorithm is not 'blind'.

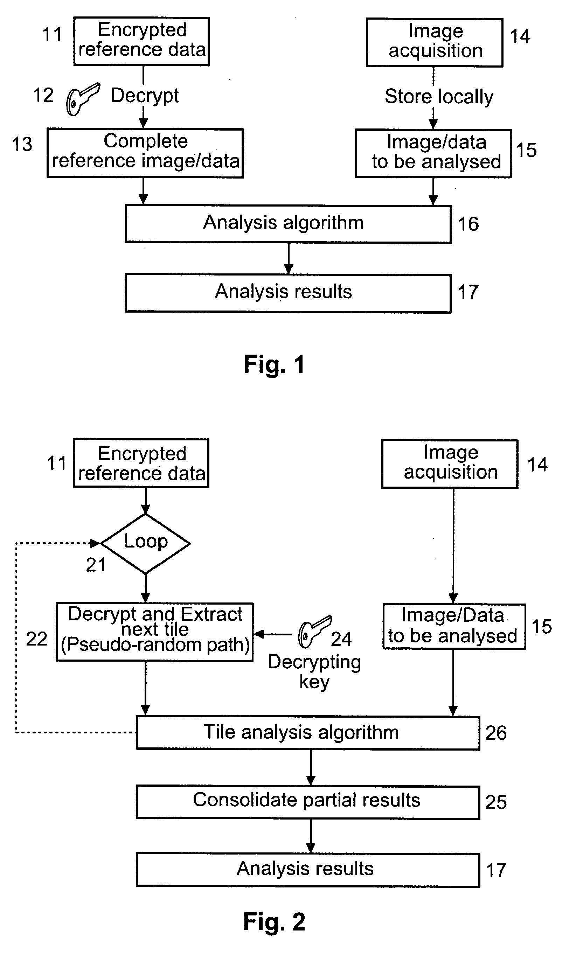

An example of a state-of-the-art system in a handheld or any embedded reader is depicted in Fig. 1. Encrypted reference data 11 are decrypted in a decryption step or stage 12 and are stored in a memory 13 as complete reference image or data. The image data to be checked (e.g. for identity with the decrypted reference data) are acquired in an acquisition step or stage 14 and are stored locally as image/data to be analysed in a memory 15, or in a different section of memory 14. A known analysis processing 16 is carried out, e.g. in a processor, providing an analysis result 17.

In such applications the decrypted reference data can be processed in a piecemeal manner, for instance by operating on a sequence of tiles or stripes extracted from a 2D array.

### Invention

Although the reference data might be stored initially in encrypted or otherwise protected form (e.g. on a smartcard) in the application, these reference data need to be made available in decrypted form for enabling operation of the further processing steps/stages. At a given point in the processing, the analysis processing needs to get both reference data and acquired data/image data to determine whether or not the acquired data is genuine. For doing that, the reference data or image must be available in the clear (i.e. in decrypted form) somewhere in the internal memory 13 of the reader. I.e., a section of unprotected candidate data is to be analysed with respect to a corresponding section of protected reference data, wherein for that analysing the protection of the reference data must be removed. Therefore, any legacy or hacking tool that allows to extract/modify data from this memory could also extract or modify the reference image or data.

Related examples of risks are:
- The reference image data of a user's fingerprint could be used for impersonating his owner, which is considered as a severe peril because such authentication element is not renewable.
- Regarding CDP, the reference image data is a critical and high value asset that could tempt an attacker to reproduce and counterfeit the CDP items.
- Regarding digital watermarks, having the reference image data would allow getting of information about the watermark processing, and thus would give hints how to remove it from the watermarked content.

A problem to be solved by the invention is to prevent that an attacker can obtain a section of decrypted application memory content during the execution of a security processing, and then can search for a suitable memory area which contains unprotected reference data in full.

This problem is solved by the method disclosed in claim 1. An apparatus that utilises this method is disclosed in claim 2.

According to the invention, the security processing is modified such that the reference data is never made available as a whole in decrypted form. Instead, only a tile or stripe or partial section or sub-section of the whole protected or encrypted or encoded reference data is made available in unprotected or decrypted or decoded form 'on the fly' only while it is required during execution of the security processing.

In addition, the strictly sequential tile processing - typically from left to right and from top to bottom for a 2-dimensional data array, or a 1-dimensional data array - can be 'shuffled' by generating a pseudo-random permutation of that sequence based on a shuffling key. Thereby the effort for the attacker to successfully retrieve the reference data is further increased substantially.

In some cases the attack might be made impossible, for instance when other technical means make it impossible for the attacker to repeatedly read out the application's memory during execution of the security processing (e.g. in case it is in an embedded system).

Advantageously, the invention allows performing the analysis processing in step or stage 17 like in the prior art, but avoids generation of the complete unprotected reference data and/or correct pattern in the memory.

In principle, the inventive method is suited for analysing a section of unprotected candidate data with respect to a corresponding section of protected reference data, wherein the protection of said reference data must be removed for said analysing, said method including the steps:
a) accessing a sub-section of said protected reference data and a corresponding sub-section of said unprotected candidate data, and removing the protection of said sub-section of said protected reference data;
b) regarding the current sub-section, analysing the unprotected reference data and the unprotected candidate data, wherein in case of storing said unprotected reference data in a memory, overwriting in said memory the unprotected reference data that were stored therein for analysing the unprotected reference data of the previous sub-section;
c) repeating steps a) and b) until the complete section of unprotected candidate data and protected reference data is analysed.

In principle the inventive apparatus is suited for analysing a section of unprotected candidate data with respect to a corresponding section of protected reference data, wherein the protection of said reference data must be removed for said analysing, said apparatus including:
a) means being adapted for accessing a sub-section of said protected reference data and a corresponding sub-section of said unprotected candidate data, and for removing the protection of said sub-section of said protected reference data;
b) means being adapted for, regarding the current sub-section, analysing the unprotected reference data and the unprotected candidate data, wherein in case of storing said unprotected reference data in a memory, overwriting in said memory the unprotected reference data that were stored therein for analysing the unprotected reference data of the previous sub-section;
c) means being adapted for repeating the operations carried out in said accessing and protection removing means and in said analysing means until the complete section of unprotected candidate data and protected reference data is analysed.

Advantageous additional embodiments of the invention are disclosed in the respective dependent claims.

### Drawings

Exemplary embodiments of the invention are described with reference to the accompanying drawings, which show in:
- Fig. 1: known security processing in which completely de- crypted reference data are analysed;
- Fig. 2: flow chart of the processing according to the inven- tion;
- Fig. 3: decoding and extracting of a tile in connection with tile shuffling;
- Fig. 4: performing decryption/decoding and tile extraction in two different processing steps;
- Fig. 5: preparation step/stage for the embodiment depicted in Fig. 4.

### Exemplary embodiments

The inventive processing makes use of the fact that the analysis step or stage 16, at any point in time, requires access to only a small (rectangular in case of 2D) part or section of the complete reference pattern or image, which small section is denoted by 'block' in the following. In many cases, such blocks are arranged in a regular order and together cover the complete reference pattern.

In one embodiment the complete reference pattern is generated, but a key (which can be equal to, or different from, the pattern generator key) is used to generate a permutation of the blocks for storage in the memory, i.e. a shuffling of their storage locations. Therefore the resulting memory image is not a true copy of the underlying security pattern, and using it to produce a counterfeit will fail.

In a further embodiment, each block is generated in decrypted format only at the time when it is required by the analysis processing, thereby overwriting the stored data from the previously used block and thus re-using its memory location, such that the complete decrypted reference pattern data is never stored in the memory at any time instant.

Fig. 2 depicts such processing, including a loop 21 which decrypts and extracts each tile on the fly in a corresponding step/stage 22 according to a secret pseudo-random path using a secret decrypting key 24. The individual results (from each loop) are received in a tile analysis step or stage 26 and are consolidated in a partial result consolidation step or stage 25 in order to provide the complete data image result, which determines whether or not acquired data and reference data are meeting the similarity conditions. The function and the processing of steps/stages 11, 14, 15 and 17 are in principle like that of the respective items in Fig. 1. Step/stage 26, or a non-depicted processor, may control the above-mentioned loop.

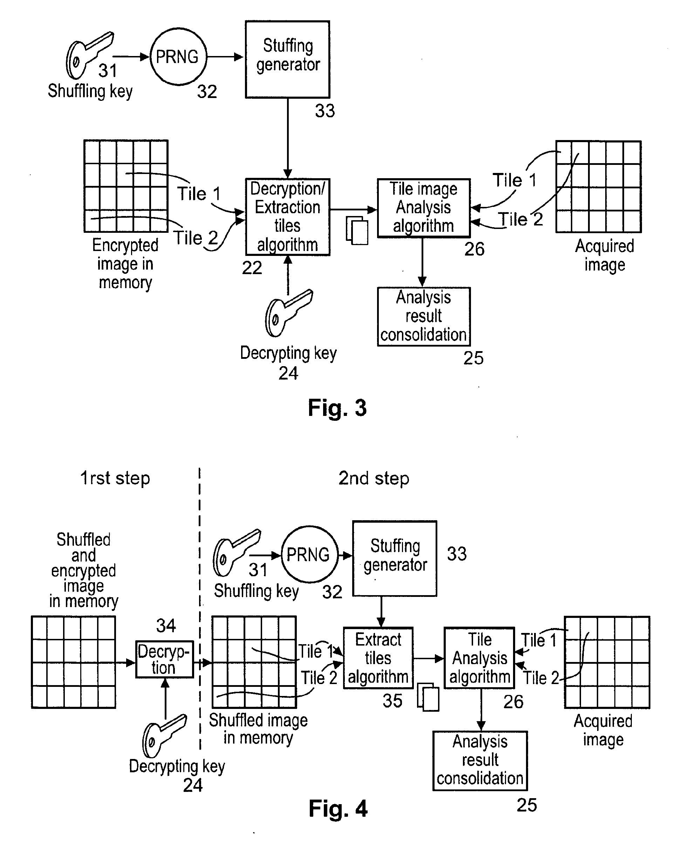

In Fig. 3 the embodiment is shown in which the access order of the encrypted tiles is shuffled and the features of both previous embodiments are combined. The function and the processing of decrypting key 24 and steps/stages 22, 25 and 26 is in principle like that of the respective items in Fig. 2. The tile extraction processing uses a shuffling generator 33 that is controlled by a pseudo-random number generator 32 which is seeded by a secret shuffling key 31. Shuffling generator 33 controls which tile is processed in the decryption and extracting step/stage 22. The tiles (Tile1, Tile2, ...) of the acquired image can be processed in the usual sequential order while the tiles (Tile1, Tile2, ...) of the reference (image) data are collected in the shuffled order, whereby the encrypted tiles were previously stored in the memory in that shuffled order, so that the (image) content of the depicted encrypted e.g. Tile1 is related to the image content of Tile1 of the acquired image. Once a tile is extracted, it feeds the tile image analysis processing 26 that compares it with the corresponding acquired tile. The final result analysis is consolidated from the various tile analysis results.

All the secure data stuff is confined to the inside of a sole algorithm and never a decrypted or decoded entire image
- even in shuffled form - is present in the clear inside the memory. Advantageously, this makes it more difficult for a hacker to rebuild the original image, which contributes to also reducing the risk of reverse engineering.

A further embodiment of the invention is depicted as a two-step process in Fig. 4. The function and the processing of decrypting key 24, shuffling key 31 and steps/stages 25, 26, 32 and 33 is in principle like that of the respective items in Fig. 3. However, step/stage 22 is separated into two different steps/stages 34 and 35. The first step of the process consists in the decryption of the entire shuffled image in decryption step/stage 34, using the decrypting key 24. The decrypted tiles are stored in a memory (still in shuffled order). The second step deals with the extraction from memory in a tiles extraction step/stage 35, using (inverse) shuffling generator 33 and pseudo-random number generator 32 seeded by the shuffling key 31, for retrieving the current position of a given tile regarding the whole shuffled image in the memory.

Advantageously, with respect to performance reasons, this embodiment can be better adapted to embedded equipment with low CPU power because it can be more efficient to pre-process the decryption of the entire image. However, the tile size must be as small as possible with respect to the size of the entire image in memory, so that it will be hard - if not even unfeasible - for an attacker to rebuild the referenced image data from the tile fragments got back at run-time.

Advantageously, even in case the decryption key will leak, the encrypted image permanently stored inside the device is still unusable by the attacker. Actually, he also must get the shuffling key. This has the further advantage that it also reduces the risk of key leakage during the transfer inside the device.

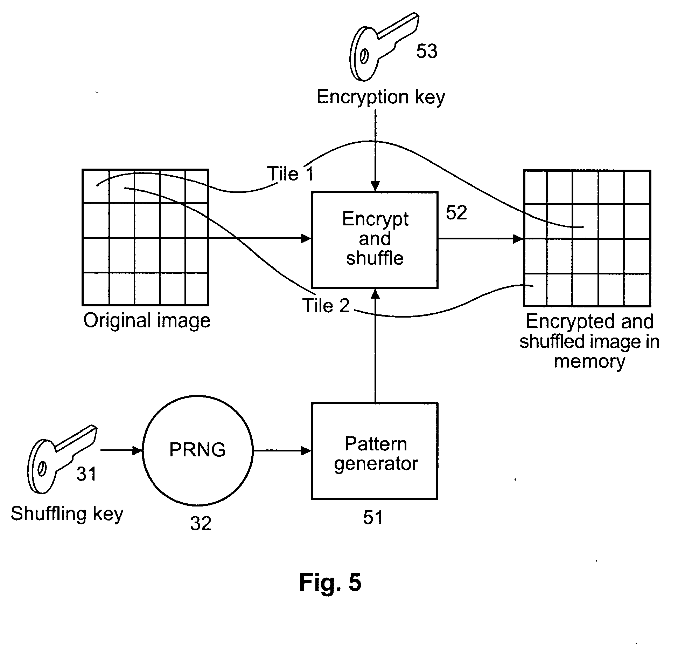

This two-step processing according to Fig. 4 requires a preparation step/stage like that shown in Fig. 5. The original reference image is encrypted or encoded and shuffled in an encryption and shuffling step/stage 52, by using a pattern generator 51 and pseudo-random number generator 32 seeded by the shuffling key 31, and by using encryption key 53. The output signal of step/stage 52 is fed to the memory, and serves as input signal to decryption step/stage 34. This pre-processing can be performed at back office prior to sending and filling all the reference images to the device.

In an alternative embodiment, the order of encryption/encoding and (inverse) shuffling is exchanged. In such case, in Fig. 4, the inverse shuffling is performed in the first step or stage using elements 31, 32 and 33, and the decryption is performed in the second step or stage using elements 24, 34 and 35.

## Claims

1. Method for analysing (16, 26) a section of unprotected candidate data (14) with respect to a corresponding section of protected reference data (11), wherein the protection of said reference data must be removed for said analysing, **characterised by** the steps:
a) accessing (22, 15) a sub-section of said protected reference data (11) and a corresponding sub-section of said unprotected candidate data (14), and removing (22) the protection of said sub-section of said protected reference data;
b) regarding the current sub-section, analysing (26) the unprotected reference data and the unprotected candidate data, wherein in case of storing said unprotected reference data in a memory, overwriting in said memory the unprotected reference data that were stored therein for analysing the unprotected reference data of the previous sub-section;
c) repeating (21) steps a) and b) until the complete section of unprotected candidate data and protected reference data is analysed (25, 17).

2. Apparatus for analysing (16, 26) a section of unprotected candidate data (14) with respect to a corresponding section of protected reference data (11), wherein the protection of said reference data must be removed for said analysing, said apparatus including:
a) means being adapted for accessing (22, 15) a sub-section of said protected reference data (11) and a corresponding sub-section of said unprotected candidate data (14), and for removing (22) the protection of said sub-section of said protected reference data;
b) means being adapted for, regarding the current sub-section, analysing (26) the unprotected reference data and the unprotected candidate data, wherein in case of storing said unprotected reference data in a memory, overwriting in said memory the unprotected reference data that were stored therein for analysing the unprotected reference data of the previous sub-section;
c) means (21, 25, 26) being adapted for repeating the operations carried out in said accessing and protection removing means (22, 15) and in said analysing means (26) until the complete section of unprotected candidate data and protected reference data is analysed.

3. Method according to claim 1, or apparatus according to claim 2, wherein said protection is an encryption based on an encryption key or an encoding, and said removal of protection is a decryption based on a decryption key (24) or a decoding.

4. Method according to claim 1 or 3, or apparatus according to claim 2 or 3, wherein said candidate data is image data (14) or a 2-dimensional candidate data array and said reference data is reference image data (11) or a 2-dimensional reference data array.

5. Method according to one of claims 1, 3 and 4, or apparatus according to one of claims 2 to 4, wherein said sub-section is a tile (Tile1, Tile2) or stripe of data.

6. Method according to one of claims 3 to 5, wherein said sub-sections of encrypted data are accessed and are decrypted (34, 24) and stored in memory, and following decryption are extracted (35) from said memory using a shuffling generator (33) that is controlled by a pseudo-random number generator (32) which is seeded by a shuffling key (31),
or apparatus according to one of claims 3 to 5, wherein said sub-sections of encrypted data are accessed and are decrypted in decryption means (34, 24) and are stored in memory, and following decryption are extracted in extracting means (35) from said memory using a shuffling generator (33) that is controlled by a pseudo-random number generator (32) which is seeded by a shuffling key (31).

7. Method according to claim 6, or apparatus according to claim 6, wherein said sub-sections of encrypted data were beforehand stored in memory in a shuffled manner under control of a pattern generator (51) that is controlled by a pseudo-random number generator (32) which is seeded by a shuffling key (31).

8. Method according to one of claims 3 to 5 wherein, prior to said decryption, said sub-sections of encrypted data are inversely shuffled (31, 32, 33) using a shuffling generator (33) that is controlled by a pseudo-random number generator (32) which is seeded by a shuffling key (31), and are stored in memory and following said inverse shuffling are extracted (35) from said memory under control of said decryption (34, 24),
or apparatus according to one of claims 3 to 5 wherein, prior to said decryption, said sub-sections of encrypted data are inversely shuffled (31, 32, 33) using a shuffling generator (33) that is controlled by a pseudo-random number generator (32) which is seeded by a shuffling key (31), and are stored in memory and following said inverse shuffling are extracted (35) from said memory under control of decryption means (34) and said decryption key (24).

9. Method according to claim 6, or apparatus according to claim 6, wherein said sub-sections of encrypted data were beforehand stored in memory in a shuffled manner under control of a pattern generator (51) that is controlled by a pseudo-random number generator (32) which is seeded by a shuffling key (31).
